# FASCICULE DE BREVET EUROPEEN

(11) **EP 0 696 976 B1**
(45) Date de publication et mention de la délivrance du brevet: **20.11.1996**
(21) Numéro de dépôt: 94915209.4
(22) Date de dépôt: 04.05.1994
(51) Int. Cl.: B62D 55/24

(54) **CHENILLE POUR VEHICULE COMPRENANT UNE BANDE DE MATIERE SOUPLE**
RAUPENKETTE MIT EINEM BAND AUS BIEGSAMEM MATERIAL FÜR EIN FAHRZEUG
TRACK FOR VEHICLE COMPRISING A FLEXIBLE MATERIAL BAND

(30) Priorité: 05.05.1993 FR 9305361
(43) Date de publication de la demande: 21.02.1996
(73) Titulaire: AVON SPENCER MOULTON, F-45330 Malesherbes (FR)
(72) Inventeur: BAILLIEZ, Denis, F-45390 Puisseaux (FR); TABARY, Daniel, F-45330 Malesherbes (FR)
(74) Mandataire: Derambure, Christian
(86) Numéro de dépôt international: FR9400518
(87) Numéro de publication internationale: WO9425327

(56) Documents cités:
- EP-A- 0 428 725
- EP-A- 0 490 829
- EP-A- 0 495 122
- WO-A-92/06884

## Description

La présente invention vise une chenille pour véhicules comprenant une bande de matière souple dans laquelle sont noyées des armatures rigides.

Les véhicules chenillés, notamment certains engins de travaux publics, sont habituellement pourvus de chenilles en métal. Ces chenilles peuvent être composées d'une série de maillons formant une courroie sans fin, dans laquelle chaque maillon est articulé par rapport au suivant au moyen d'un axe transversal.

Les chenilles en métal sont bien adaptées aux terrains accidentés ou couverts de pierres. Cependant, elles présentent deux inconvénients. En premier lieu, le contact du métal détériore le revêtement des routes d'accès aux zones de travaux. En second lieu, les chenilles en métal sont peu efficaces en terrain boueux car la boue passe à travers les orifices de la chenille et freine, voire bloque la progression de l'engin qui finit par s'enfoncer dans le sol boueux.

Pour résoudre ces problèmes, on a proposé de remplacer, lorsque le terrain le nécessitait, les chenilles en métal par des chenilles en caoutchouc munies d'armatures métalliques transversales. Ces armatures présentent des portions en saillie s'étendant sur la face interne de la chenille et alignées en deux files symétriques disposées de part et d'autre de l'axe longitudinal de la chenille. Des cavités sont pratiquées sur la face interne le long de l'axe de la chenille pour permettre l'engagement des dents du barbotin qui est celui des éléments de roulement du véhicule qui fournit le couple nécessaire à la progression du véhicule. La face extérieure de la chenille est munie de crampons.

Toutefois, la plupart des chenilles en caoutchouc ne sont pas compatibles avec les éléments de roulement des véhicules - galets de roulement, barbotins et poulies de tension - prévus pour les chenilles en métal et nécessitent de ce fait l'installation de trains de roulement spéciaux. En particulier, les galets de roulements utilisables avec de telles chenilles en caoutchouc doivent présenter sur toute leur circonférence un large évidement central dans lequel viennent se loger les portions en saillie au fur et à mesure du roulement, assurant ainsi le centrage des galets lors de leur parcours de la face intérieure de la chenille. Lorsque le véhicule arrive sur une route ou sur un terrain boueux, il est donc nécessaire de changer les chenilles et les éléments des trains de roulement du véhicule.

Le brevet européen 0 118 912 en date du 10 mars 1984 attribué à Bridgestone Corporation, présente une chenille en caoutchouc similaire qui est utilisable avec le train de roulement initial correspondant aux chenilles métalliques. Il est donc seulement nécessaire de changer la chenille métallique pour une chenille en caoutchouc. Les portions en saillie ont une forme allongée suivant la direction longitudinale de la chenille et sont séparées les unes des autres par un intervalle. Cette fois, les galets roulent sur le sommet des portions en saillie sans reposer sur la face interne de la chenille, de sorte que les sommets des portions en saillie constituent maintenant le chemin de roulement des galets. La largeur de l'intervalle entre deux portions en saillie successives est choisie de façon à permettre la flexion de la chenille sans pour autant que les galets puissent venir se coincer entre les deux portions en saillie.

Cependant, le passage de cet intervalle lors du roulement d'un galet d'une portion en saillie sur l'autre produit un petit choc. Sachant qu'un véhicule chenillé comporte de nombreux galets, il en résulte une vibration permanente et importante dès que le véhicule se met à avancer, ce qui altère sensiblement le confort de conduite. De plus, ces chocs incessants sur les extrémités de chaque portion en saillie accélèrent prématurément leur usure et leur fragilisation et menace la sécurité lors des manoeuvres du véhicule.

Par ailleurs, en tentant de pallier cet inconvénient, il est important de ne, pas gêner l'évacuation des boues ou des matériaux qui viennent se loger contre la face interne de la chenille et peuvent nuire au contact de la chenille avec les galets, la poulie de tension et le barbotin.

La présente invention a pour but d'éviter ces inconvénients en proposant une chenille en caoutchouc adaptable sur un véhicule chenillé sans changement du train de roulement, assurant un très bon confort de manoeuvre et préservant la durée de vie de la chenille tout en facilitant l'évacuation des matériaux au voisinage de la face interne de la chenille.

La présente invention propose donc une chenille pour véhicule, comprenant une bande de matière souple dans laquelle sont noyées des armatures rigides s'étendant transversalement à la bande et espacées régulièrement le long de la direction longitudinale de la bande, une face intérieure de la bande présentant des protubérances de forme allongée selon la direction longitudinale et disposées par paires symétriquement par rapport à l'axe longitudinal de la bande, ces protubérances étant formées au moins partiellement à partir de portions en saillie respectives des armatures.

Selon l'invention, la chenille se caractérise en ce que des paires de protubérances formées à partir de portions en saillie d'armatures adjacentes présentent un chevauchement longitudinal, en ce que chaque armature comprend au moins deux paires de protubérances formées à partir de portions en saillie respectives de ladite armature, ces paires de protubérances présentant un chevauchement longitudinal et en ce que les protubérances formées à partir de portions en saillie d'une même armature, situées d'un même côté de l'axe longitudinal de la bande et appartenant à des paires de protubérances différentes sont séparées par un intervalle dans la direction transversale de la bande.

De cette façon, les sommets des, portions en saillie constituent pour les galets un chemin de roulement continu suivant la direction longitudinale de la bande. Les galets roulent d'une portion en saillie sur l'autre sans discontinuité et sans choc. Aucune vibration liée au roulement des galets ne vient donc altérer le confort de la conduite, ni provoquer une usure prématurée des saillies. Le confort, la durée de vie des portions en saillie et la sécurité sont donc sensiblement renforcés.

En outre, le chevauchement longitudinal des paires de portions en saillie crée un intervalle dans la direction transversale entre les portions en saillie. Lors du mouvement de la chenille, cet intervalle ainsi que l'intervalle entre les protubérances contiguës d'une même armature permettent l'évacuation des matériaux (boue, petits débris) qui peuvent venir se loger entre les protubérances au voisinage de l'axe longitudinal de la chenille et nuire à l'engrènement du barbotin et au roulement des galets.

L'invention fournit donc un chemin de roulement continu pour les galets sans provoquer en partie centrale de la chenille l'accumulation de matériaux qui pourraient nuire à son fonctionnement.

Suivant une version avantageuse de l'invention, la face intérieure de la bande est munie de cavités régulièrement espacées, disposées le long de l'axe longitudinal de la bande. En outre, deux protubérances formées à partir de portions en saillie d'une même armature, ces deux protubérances étant symétriques par rapport à l'axe longitudinale de la bande, sont reliées par un bossage de ladite surface intérieure de la bande, ce bossage étant formé au moins partiellement à partir d'une portion de ladite armature et étant disposé à un bord d'une desdites cavités.

Ainsi, le bossage associé à chaque cavité de la face interne de la chenille fournit à la dent du barbotin un appui plus important afin de faciliter l'engrènement de celui-ci. De plus, le bossage est disposé entre deux portions en saillie symétriques, et permet de ce fait un renfort mutuel de ces trois éléments.

Suivant une version préférée de l'invention, le sommet de chaque protubérance s'étend parallèlement à la bande suivant la direction longitudinale de la bande et une partie des protubérances les plus éloignées de l'axe longitudinal de la bande, située du côté opposé à celui-ci, présente un profil courbe convexe suivant la direction transversale de la bande.

Ainsi, lorsque le véhicule roule sur un terrain en dévers provoquant une inclinaison latérale du véhicule, le poids du véhicule peut se reporter naturellement, par l'intermédiaire des galets, sur les portions en saillie situées du côté de la chenille opposé à la direction de la pente. La forme arrondie du sommet de ces portions en saillie assure un bon contact entre la surface du galet et le sommet de la portion en saillie, en réduisant les risques de dérapage ou de sortie du galet.

D'autres caractéristiques et avantages de la présente invention apparaîtront encore dans la description qui va suivre de deux exemples de réalisation de l'invention, considérée conjointement aux dessins annexés à titre non limitatifs et dans lesquels :
- la figure 1 est une vue en perspective partielle d'une première réalisation de l'invention,
- la figure 2 est une vue en perspective de l'armature rigide 2, 3 de la figure 1,
- la figure 3 est une coupe suivant IV-IV de l'armature 2, 3 de la figure 2.
- la figure 4 est une élévation montrant une partie de la chenille de la figure 1 installée sur le train de roulement d'un véhicule,
- la figure 5 présente en coupe transversale une chenille illustrant une deuxième réalisation de l'invention en contact avec un galet de roulement d'un véhicule manoeuvrant sur un terrain en dévers.
- la figure 6 est une vue en plan de la chenille de la figure 1,
- la figure 7 est une vue en coupe selon le plan VII-VII de la figure 6, et
- la figure 8 est une vue en coupe selon le plan VIII-VIII de la figure 6.

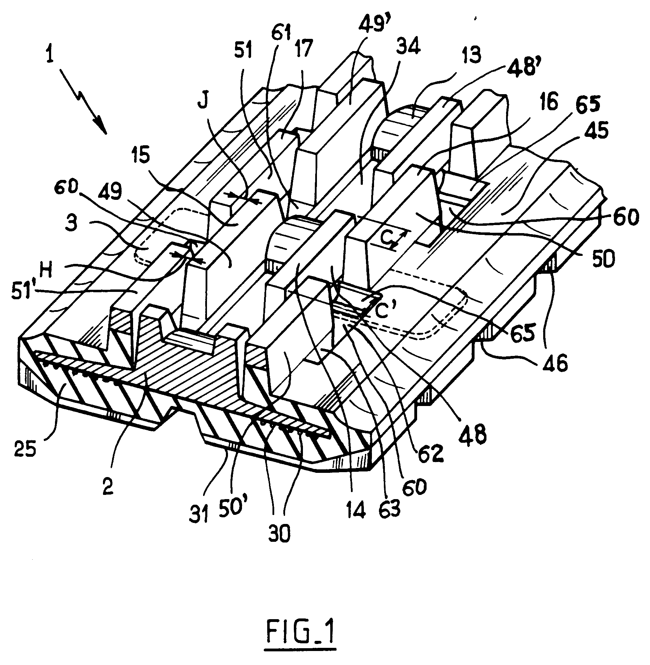

Une première réalisation de la chenille selon l'invention est représentée partiellement à la figure 1. La chenille 1 comprend une bande épaisse 25 de matière souple, par exemple de caoutchouc. Dans cette bande 25 sont noyées des armatures rigides 2, 3 qui s'étendent transversalement à la bande 25. L'armature 2 est visible en coupe et l'armature 3 est représentée partiellement en traits pointillés. Les armatures 2, 3 sont toutes identiques et sont réalisées en un matériau rigide adapté, par exemple en acier.

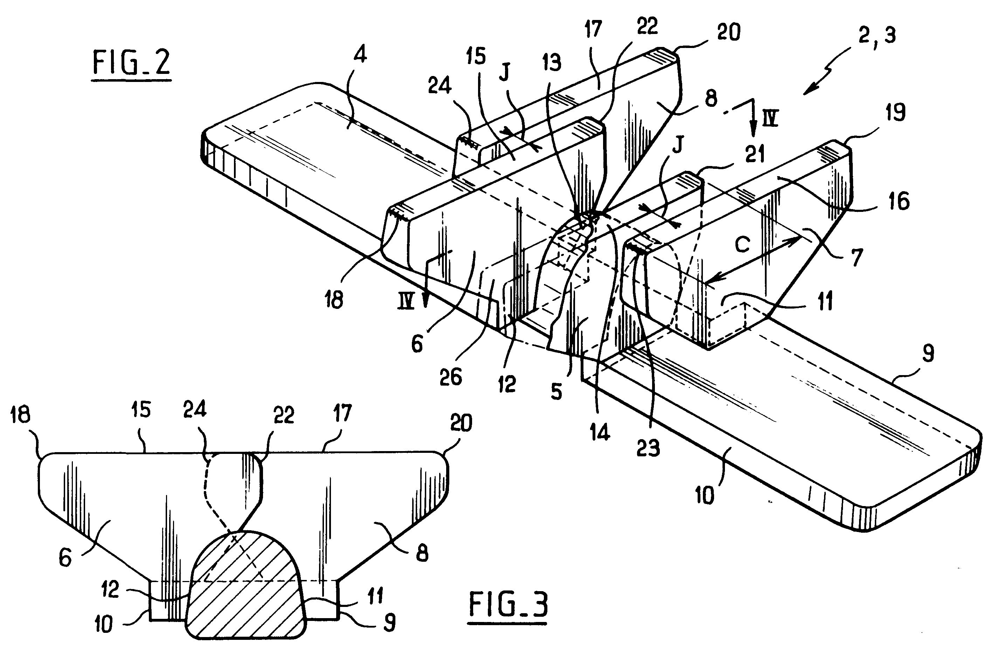

On va d'abord décrire précisément la forme générale des armatures 2, 3 à l'aide des figures 2 et 3.

Chaque armature 2, 3 comprend un socle 4 de forme générale plate rectangulaire allongée. La longueur et la largeur de ce rectangle définissent respectivement les directions longitudinales et transversales de l'armature 2, 3. Les deux grands côtés 9 et 10 du socle 4 présentent chacun en leur centre une échancrure 11, 12 rectangulaire symétrique, longue suivant la direction longitudinale de l'armature et peu profonde. Les deux échancrures 11 et 12 ont la même profondeur et l'échancrure 11 est plus longue que l'échancrure 12. Nous appellerons les échancrures 11 et 12 respectivement les échancrures "longue" et "courte". La partie centrale du socle 4 qui est placée entre les échancrures 11 et 12 présente donc un étranglement. A l'endroit de cet étranglement, la face supérieure du socle 4 est munie d'un bossage 13 s'étendant vers le haut, en forme générale de demi-cylindre. L'axe du cylindre est placé dans la direction longitudinale du socle 4 et les flancs latéraux de ce demi-cylindre coïncident avec le fond des échancrures 11 et 12.

Deux portions en saillie 5 et 6 du socle 14 sont présentes de part et d'autre des extrémités du bossage 13. Chaque portion en saillie 5 et 6 a une forme générale plate et ses deux faces sont symétriques de forme générale trapézoïdale. Les deux portions en saillie sont disposées de sorte que leurs grandes faces soient perpendiculaires à la direction longitudinale du socle 4 et de sorte que chaque portion en saillie 5 et 6 s'appuie par une de ses faces contre une partie d'une extrémité du bossage 13. Pour chaque face de chaque portion en saillie 5 et 6, parmi les deux côtés parallèles du trapèze, le petit côté est commun avec le socle 14 tandis que le grand côté constitue une arête du sommet 14 et 15 de la portion en saillie 5, 6. Les sommets respectifs 14 et 15 des portions en saillie 5 et 6 ont ainsi chacun une forme générale de rectangle très allongé s'étendant dans la direction transversale de l'armature et sont inclus dans un même plan parallèle au socle 14.

Deux autres portions en saillie 7 et 8 de même forme que les portions en saillies 5 et 6 sont disposées de part et d'autre à l'extérieur de ces dernières, parallèlement à celles-ci, de façon que les portions en saillie 7 et 8 encadrent partiellement les portions en saillie 5 et 6. Les sommets 16 et 17 des portions en saillies 7 et 8 sont situés dans le même plan que les sommets 14 et 15, et sont orientés dans la direction transversale de l'armature, tout comme les sommets 14 et 15. Les portions en saillie 5 et 6 sont respectivement séparées des portions en saillie 7 et 8 par un intervalle J dans la direction longitudinale de l'armature. Cet intervalle est par exemple environ égal à la moitié de l'épaisseur d'une saillie.

Les bases respectives des portions en saillie 5 et 6 sont placées près du grand côté 10 du socle 4 de façon à encadrer l'échancrure courte 12. Les sommets 14 et 15 ont chacun une extrémité respective 26 et 18 qui s'avance dans la direction transversale du socle 4 vers l'extérieur de l'armature sensiblement au-delà de la verticale du bord 10 du socle 4. De même, les bases des portions en saillie 7 et 8 sont placées près du bord 9 du socle 4 de façon à encadrer l'échancrure longue 11. Les sommets 16 et 17 ont chacune une extrémité respective 19 et 20 qui s'avance dans la direction transversale du socle 4 vers l'extérieur de l'armature, sensiblement au-delà de la verticale du bord 9 du socle 4. Ainsi, les sommets 14, 15, 16 et 17 des portions en saillies 5, 6, 7, 8 s'étendent en partie supérieure au-delà des bords 9 et 10 du socle 4.

Il résulte de cette disposition que les portions en saillie 5 et 6 sont plus proches l'une de l'autre que le sont les portions en saillie 7 et 8 qui les encadrent. Par commodité, pour toutes les armatures 2, 3, nous appellerons les portions en saillie 5 et 6 les "portions I" et les portions 7 et 8 les "portions E". Chaque armature présente donc une paire de portions I et une paire de portions E.

Les extrémités des sommets 14, 15, 16 et 17 opposées respectivement aux extrémités 26, 18, 19 et 20 portent les références respectives 21, 22, 23 et 24.

Les extrémités 21 et 22 s'avancent dans la direction transversale du socle 4 vers le bord 9 en dépassant les extrémités 23 et 24, ce qui revient à écrire, réciproquement que, en sens inverse, les extrémités 23 et 24 s'avancent dans la direction transversale du socle 4, vers le bord 10, en dépassant les extrémités 21 et 22. De la sorte, les sommets 14, 15, 16 et 17 présentent au voisinage du bossage 13 un chevauchement C dans la direction transversale de l'armature 2, 3. Compte tenu de la disposition des armatures 2, 3 dans la bande 25, il s'agit d'un chevauchement dans la direction longitudinale de la bande 25.

Les armatures 2, 3 sont fabriquées d'un seul tenant par exemple par un procédé de fonderie. Lors de la finition des armatures 2, 3, toutes les arêtes sont arrondies.

Lors de la fabrication de la chenille, les armatures rigides 2, 3 sont disposées côte à côte avec leur grands côtés parallèles et légèrement espacés. Elles sont alignées et toutes orientées dans le même sens. Elles sont suffisamment rapprochées entre elles pour que les portions I de chaque armature s'avancent entre les portions E de l'armature suivante, créant de ce fait un nouveau chevauchement longitudinal C' de portions en saillie par exemple de même valeur que le chevauchement C.

Il en résulte que chaque paire de portion en saillie présente un chevauchement avec les deux paires de portions voisines, à savoir la paire de portions en saillie de la même armature et la paire de portions en saillie d'une armature adjacente. De plus, chaque échancrure "courte" d'une armature fait face à une échancrure "longue" de l'armature suivante, de sorte qu'une cavité 34 est formée entre tous les bossages 13.

Le chevauchement longitudinal C' des portions en saillie de deux armatures adjacentes crée entre ces portions en saillie un intervalle H dans la direction transversale de la chenille. Cet intervalle H est sensiblement égal à l'intervalle J à cause de la forme et de la disposition des armatures.

Les armatures rigides 2, 3 sont reliées entre elles par des câbles 30 par exemple en acier, disposés en nappes par exemple contre la face inférieure du socle 4 de chaque armature 2, 3 (voir figure 1).

La bande 25 est moulée autour de l'ensemble armatures-câbles de sorte que celui-ci se retrouve noyé dans la bande 25. La bande 25 forme ainsi le corps extérieur de la chenille 1. Les armatures 2, 3 assurent la rigidité transversale de la bande 25 et les câbles 30 renforcent sa résistance à la tension longitudinale tout en permettant sa flexion longitudinale.

La face externe 31 de la bande 25, opposée aux portions en saillie présente des crampons 46 permettant le déplacement du véhicule chenillé en terrain boueux.

Lors du moulage de la bande 25, la surface des portions en saillie 5, 6, 7 et 8 et des bossages 13 peut être recouverte d'une pellicule de caoutchouc, mais ce moulage de la bande est tel que les portions en saillie 5, 6, 7, 8 et les bossages 13 dépassent sensiblement la face interne 45 de la bande 25. La face interne 45 de la chenille 1 présente ainsi des protubérances 48, 49, 50, 51 formées au moins partiellement à partir des portions en saillie respectives 5, 6, 7, 8 des armatures, le sommet des protubérances 48, 49, 50, 51 étant le sommet 14, 15, 16 et 17 des portions en saillie des armatures 2, 3. Il en résulte que les chevauchements C et C' et les intervalles J et H décrits plus haut entre les portions en saillie sont transposés à l'identique avec les protubérances comme le montre la figure 1.

De plus, lors du moulage, on empêche le caoutchouc de venir combler les cavités 34 entre les bossages 13 de façon que les cavités 34 et les bossages 13 soient présents sur la face interne de la bande 25.

Finalement, la bande est repliée sur elle-même et ses extrémités sont collées entre elles pour former une chenille 1 en forme de courroie sans fin comme il est bien connu.

La chenille 1 est utilisée de la façon suivante. Lorsqu'un véhicule muni de chenilles en métal doit passer sur un revêtement fragile comme une route ou sur un terrain boueux nécessitant l'installation de chenilles en caoutchouc, on remplace les chenilles en métal par les chenilles 1 selon l'invention, et ce, sans changer les trains de roulement du véhicule, à savoir les barbotins, les poulies de tension et les galets de roulement.

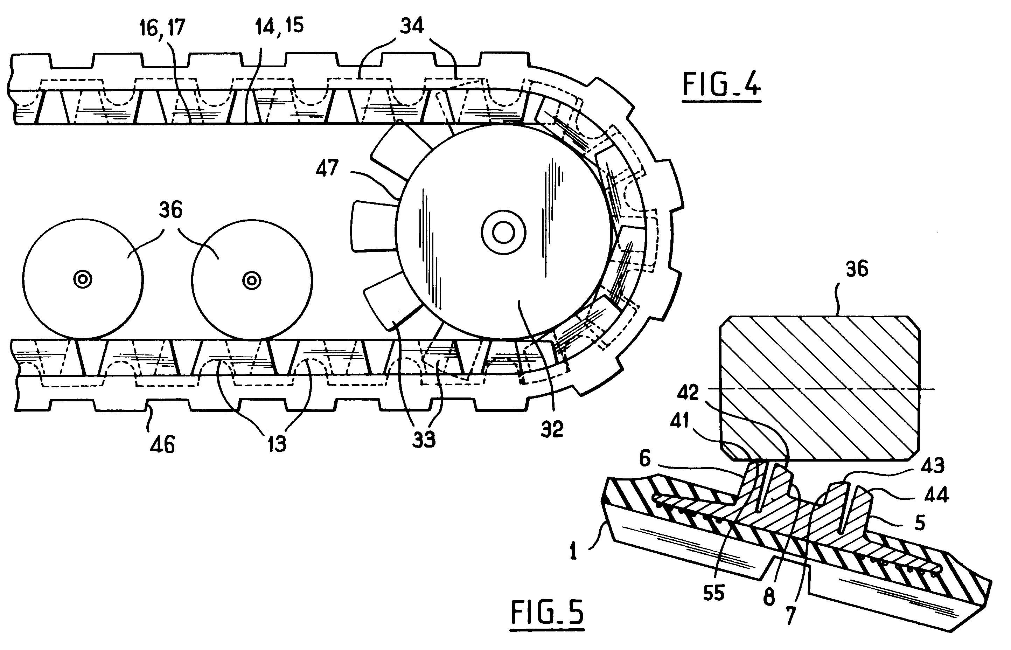

La figure 4 présente une partie de la chenille 1 selon l'invention installée sur un véhicule.

Le barbotin 32 transmet le couple nécessaire à l'avancée du véhicule et est à cette fin muni de dents d'engrènement 33 disposées sur le pourtour du barbotin 32. Les dents 33 viennent se loger dans les cavités 34 pour prendre appui sur le bossage 13 bordant chaque cavité 34 ainsi que sur la tranche du socle 4 de l'armature correspondante, située au fond des échancrures 11, 12.

La partie cylindrique 47 du pourtour du barbotin 32 est en contact avec les sommets 14, 15, 16, 17 des protubérances, tout comme la poulie de tension non représentée. Les galets de roulement 36 qui soutiennent le véhicule roulent également sur les sommets 14, 15, 16, 17 des protubérances. L'écartement transversal des paires de protubérances 48, 49, 50, 51 est choisi de façon à permettre un contact optimum avec la partie cylindrique du pourtour du barbotin 32, de la poulie de tension et des galets de roulement 36.

On notera que lorsque la chenille est neuve, le caoutchouc recouvrant le sommet 14, 15, 16, 17 des portions en saillie 5, 6, 7, 8 sera rapidement usé par le frottement des éléments roulants. Ainsi, après quelques manoeuvres du véhicule chenillé, les éléments roulant seront directement en contact avec les sommets 14, 15, 16 et 17 des portions en saillie 5, 6, 7, 8 des armatures 2, 3.

La face extérieure 31 de la chenille 1 en contact avec le sol étant munie de crampons 46 en caoutchouc, le véhicule pourra se déplacer sur les routes sans endommager le revêtement et avancer en terrain boueux sans s'enfoncer.

Les chevauchements C et C' dans la direction longitudinale de la bande, caractéristiques de la disposition des sommets des protubérances - chevauchement C entre les sommets des protubérances d'une même armature d'une part et chevauchement C' entre les sommets des protubérances d'armatures adjacentes d'autre part - fournissent un chemin de roulement continu pour les éléments du train de roulement. Puisqu'il n'y a plus d'intervalle dans la direction longitudinale de la chenille entre deux protubérances consécutives, le passage d'un élément roulant, par exemple un galet, ne génère aucun choc. Le déplacement du véhicule se fait pratiquement sans vibration due aux roulements sur la chenille.

Le confort du véhicule est donc sensiblement amélioré. Les extrémités des protubérances ne subissant plus de choc, leur durée de vie est augmentée, leur fragilisation réduite et la sécurité du maniement du véhicule est améliorée.

En outre, puisque le bossage 13 forme une jonction entre les portions en saillie 14 et 15 de la paire I, la solidité de ces trois éléments se trouve renforcée par un soutien mutuel.

Les intervalles H et J permettent l'évacuation des boues, matériaux et débris qui pourraient se loger en partie centrale de la chenille. Cette évacuation a lieu notamment lorsque les reliefs du terrain provoquent la courbure locale de la chenille au passage de celle-ci, ainsi qu'au voisinage du barbotin et de, la poulie de tension où cette courbure est accentuée.

Dans une autre réalisation de l'invention, illustrée à la figure 5, on peut donner une forme différente aux sommets 41, 42, 43, 44 des portions en saillie 7, 5, 6, 8, à savoir leur donner un profil courbe convexe suivant la direction transversale de la bande, par exemple un profil convexe (55) en arc de cercle.

Ainsi, lorsque le véhicule chenillé se trouve sur un terrain en dévers, le poids du véhicule peut plus facilement se reporter, par l'intermédiaire des galets 36 représentés schématiquement par un cylindre, sur les protubérances 41 de chaque chenille 1 situées du côté opposé à la pente. Le profil convexe 55 en arc de cercle assure une liaison en frottement entre les galets 36 et la chenille 1 encore meilleure que les arêtes des sommets selon la réalisation de l'invention décrite plus haut. La charge du galet 36 se trouve reportée sur une surface importante du sommet de la portion en saillie, ce qui réduit le risque de rupture des portions en saillie. L'augmentation de la surface d'adhérence et de contact réduit les dérapages pouvant provoquer la sortie du galet 36 hors du chemin de roulement constitué par le sommet des saillies.

Par ailleurs, la présente invention vise à éviter l'usure prématurée du caoutchouc. Notamment, lors de l'enroulement de la chenille autour du barbotin et de la poulie de tension, il apparaît entre deux protubérances successives des contraintes de compression et de cisaillement importantes qui peuvent entraîner sur les chenilles classiques une usure prématurée du caoutchouc pouvant conduire à la destruction de la chenille.

La chenille décrite permet de surmonter ces inconvénients.

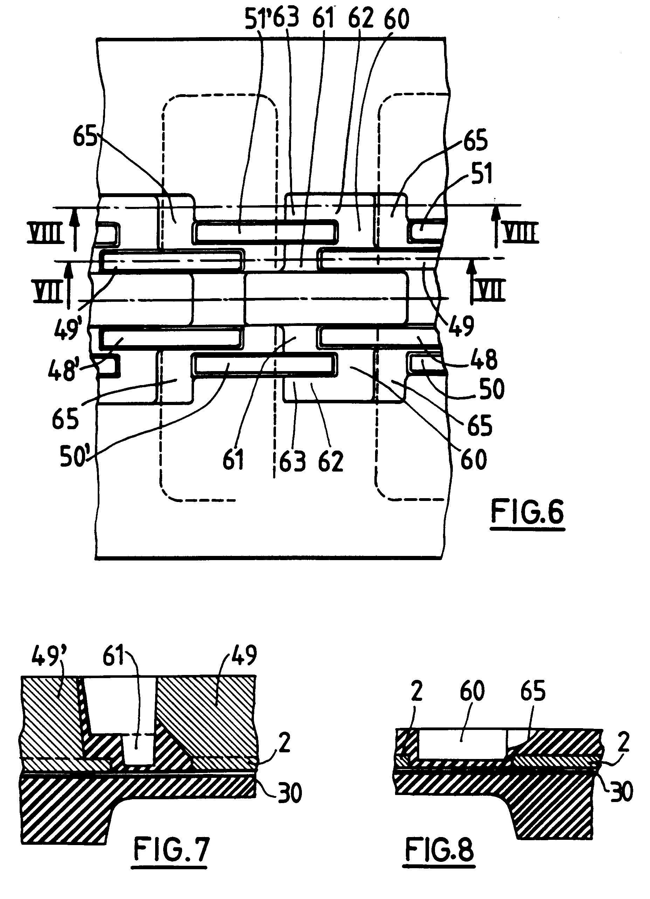

En référence aux figures 6, 7, et 8, la chenille est telle que la face intérieure 45, de la bande présente respectivement, entre les protubérances 48 et 48', 49 et 49', 50 et 50', 51 et 51' se faisant suite longitudinalement, des évidements 60 et 61 s'étendant sensiblement jusqu'à la profondeur des câbles 30 reliant les socles 2 des armatures. Les évidements 60 et 61 sont respectivement disposés symétriquement par rapport à l'axe longitudinal de symétrie de la bande. Les configurations des évidements 60 sont également symétriques, de même que pour les évidements 61.

Une portion 62 de chaque évidement 60, 61 s'étend entre les socles 2 desdites protubérances, jusqu'à atteindre sensiblement les câbles 30 correspondant sensiblement à la ligne neutre de la bande. Une portion 63 de chaque évidement 60 s'étend partiellement le long d'une face latérale d'une protubérance.

Dans le présent mode de réalisation, les évidements 60 et 61 sont contigus de sorte qu'ils constituent un seul évidement.

Au pied des protubérances 50, 50', 51, 51', au-dessus du socle 2, les évidements 60 présentent une surface 65 en secteur de cylindre.

Ces évidements 60 et 61 permettent aux protubérances précitées de se rapprocher au maximum lors de leur passage près de la poulie de tension ou du barbotin sans solliciter exagérément le caoutchouc.

Les évidements 60, 61 sont réalisés lors du moulage de la matière souple.

Bien entendu, on pourra apporter de nombreuses modifications et améliorations aux réalisations qui viennent d'être décrites sans sortir du cadre de la présente invention définie par les revendications annexées.

## Revendications

1. Chenille (1) pour véhicule, comprenant une bande (25) de matière souple dans laquelle sont noyées des armatures rigides (2, 3) s'étendant transversalement à la bande (25) et espacées régulièrement le long de la direction longitudinale de la bande (25), une face intérieure (45) de la bande (25) présentant des protubérances (48, 49, 50, 51) de forme allongée selon la direction longitudinale et disposées par paires symétriquement par rapport à l'axe longitudinal de la bande (25), ces protubérances (48, 49, 50, 51) étant formées au moins partiellement à partir de portions en saillie (5, 6, 7, 8) respectives des armatures (2, 3), le sommet de ces protubérances étant destiné à servir de support pour les galets de roulement du véhicule, caractérisée en ce que des paires de protubérances formées à partir de portions en saillie d'armatures (2, 3) adjacentes présentent un chevauchement longitudinal (C'), en ce que chaque armature (2, 3) comprend au moins deux paires de protubérances (48, 49, 50, 51) formées à partir de portions en saillie (5, 6, 7, 8) respectives de ladite armature (2, 3), ces paires de protubérances (48, 49, 50, 51) présentant un chevauchement longitudinal (C) et en ce que les protubérances formées à partir de portions en saillie (5, 6, 7, 8) d'une même armature (2, 3), situées d'un même côté de l'axe longitudinal de la bande (25) et appartenant à des paires de protubérances différentes sont séparées par un intervalle (J) dans la direction transversale de la bande.

2. Chenille conforme à la revendication 1, caractérisée en ce que la face intérieure (45) de la bande (25) est munie de cavités (34) régulièrement espacées, disposées le long de l'axe longitudinal de la bande (25).

3. Chenille conforme à la revendication 2, caractérisée en ce que deux protubérances (48, 49) formées à partir de portions en saillie (5, 6) d'une même armature (2, 3), ces deux protubérances (48, 49) étant symétriques par rapport à l'axe longitudinal de la bande (25), sont reliées par un bossage (13) de ladite surface intérieure (45) de la bande (25), ce bossage (13) étant formé au moins partiellement à partir d'une portion de ladite armature (2, 3) et étant disposé à un bord d'une desdites cavités (34).

4. Chenille conforme à l'une des revendications 1 à 3, le sommet (14, 15, 16, 17) de chaque protubérance (48, 49, 50, 51) s'étendant parallèlement à la bande (25) suivant la direction longitudinale de la bande (25), caractérisée en ce qu'au moins une partie du sommet (16, 17) des protubérances (50, 51) les plus éloignées de l'axe longitudinal de la bande (25), située du côté opposé à l'axe longitudinal de la bande (25), présente un profil courbe convexe (55) suivant la direction transversale de la bande (25).

5. Chenille conforme à la revendication 4, caractérisée en ce qu'au moins une partie du sommet (14, 15, 16, 17) de chaque protubérance (48, 49, 50, 51) présente un profil courbe convexe (55) suivant la direction transversale de la bande (25).

6. Chenille selon l'une des revendications précédentes, caractérisée en ce que ladite face intérieure (45) de la bande présente, entre les protubérances (48, 48', 49, 49', 50, 50', 51, 51') se faisant suite longitudinalement, un évidement (60, 61) s'étendant au moins en partie sensiblement jusqu'à la profondeur des câbles (30) reliant les socles (2) des armatures.

7. Chenille selon la revendication 6, caractérisée en ce qu'une portion (62) de l'évidement (60, 61) s'étend entre les socles (2) des dites protubérances.

8. Chenille selon la revendication 6 ou 7, caractérisée en ce qu'une portion (63) de l'évidement (60) s'étend partiellement le long d'une face latérale d'une protubérance.

## Claims

1. Articulated transmission belt (1) for a vehicle including a flexible strip (25) housing rigid armatures (2, 3) extending transversally to the strip (25) and evenly spaced along the longitudinal direction of the strip (25), an internal face (45) of the strip (25) having elongated protuberances (48, 49, 50, 51) along the longitudinal direction and disposed by pairs symmetrical with respect to the longitudinal axis of the strip (25), these protuberances (48, 49, 50, 51) being formed, at least partially, from respective projecting portions (5, 6, 7, 8) of the armatures (2, 3), the top of these protuberances being intended to be used as a support for the bearing rollers of the vehicle, characterised in that pairs of protuberances formed from adjacent armature projecting portions (2, 3) have a longitudinal overlap (C) and in that the protuberances formed from the protecting portions (5, 6, 7, 8) of a given armature (2, 3) situated on a given side of the longitudinal axis of the strip (25) and belonging to pairs of different protuberances are separated by a gap (J) in the transverse direction of the strip.

2. Articulated transmission belt according to claim 1, characterised in that the internal face (45) of the strip (25) is provided with evenly spaced cavities disposed along the longitudinal axis of the strip (25).

3. Articulated transmission belt according to claim 2, characterised in that two protuberances (48, 49) formed from the projecting portions (5, 6) of a given armature (2, 3) and symmetrical with respect to the longitudinal axis of the strip (25) are connected by a boss (13) of said internal surface (45) of the strip (25), this boss (13) being formed, at least partially, from a portion of said armature (2, 3) and disposed at one edge of one of said cavities (34).

4. Articulated transmission belt according to any one of claims 1 to 3, the top (14, 15, 16, 17) of each protuberance (48, 49, 50, 51) extending parallel to the strip (25) along the longitudinal direction of the strip (25), characterised in that at least one portion of the top (16, 17) of the protuberances (50, 51) most distant from the longitudinal axis of the strop (25) have a convex curved profile (55) along the transversal direction of the strip (25).

5. Articulated transmission belt according to claim 4, characterised in that at least one portion of the top (14, 15, 16, 17) of each protuberance (48, 49, 50, 51) have a convex curved profile (55) along the transverse direction of the strip (25).

6. Articulated transmission belt according to any one of the preceding claims, characterised in that, between the protuberances (48, 48', 49, 49', 50, 50', 51, 51') extending longitudinally, said internal face (45) of the strip has a recess (60, 61) extending at least approximately partly as far as the depth of cables (30) connecting the bases (2) of the armatures.

7. Articulated transmission belt according to claim 6, characterised in that one portion (62) of the recess (60, 61) extends between the bases (2) of said protuberances.

8. Articulated transmission belt according to claim 6 or 7, characterised in that one portion (63) of the recess (60) extends parallel along one lateral face of a protuberance.

## Patentansprüche

1. Kette (1) für Kettenfahrzeuge mit einem Band (25) aus flexiblem Werkstoff, in dem steife Armierungen (2, 3) eingeschlossen sind, die quer zur Längsrichtung des Bandes (25) verlaufen und in regelmäßigen Abständen darin angeordnet sind, wobei die Innenseite (45) des Bandes (25) längliche, in der Längsrichtung des Bandes verlaufende und parallel zu dessen Mittellinie angeordnete Vorsprünge (48, 49, 50, 51) aufweist, die zumindest teilweise aus den entsprechenden vorspringenden Teilen der Armierungen (2, 3) bestehen, wobei der Scheitel der Vorsprünge dazu dient, ein Gegenlager für die Laufrollen des Fahrzeugs zu bilden, **dadurch gekennzeichnet, daß** Paare von aus den entsprechenden vorspringenden Teilen der aneinanderliegenden Armierungen (2, 3) bestehenden Vorsprüngen eine Überlagerung (C') in Längsrichtung aufweisen, daß jede Armierung (2, 3) mindestens zwei Paare von aus vorspringenden Teilen (5, 6, 7, 8) der Armierungen (2, 3) bestehenden Vorsprüngen (48, 49, 50, 51) besitzt, wobei diese Paare von Vorsprüngen (48, 49, 50, 51) eine Überlagerung (C) in Längsrichtung aufweisen und daß die aus vorspringenden Teilen (5, 6, 7, 8) ein und derselben Armierung (2, 3) bestehenden Vorsprünge, die auf derselben Seite in Bezug auf die Längsachse des Bandes (25) liegen und zu unterschiedlichen Paaren von Vorsprüngen gehören, durch einen Abstand (J) in Querrichtung des Bandes voneinander getrennt sind.

2. Kette nach Patentanspruch 1, dadurch gekennzeichnet, daß die Innenseite (45) des Bandes (25) in regelmäßigen Abständen mit Aussparungen (34) auf der Längsachse des Bandes (25) versehen ist.

3. Kette nach Patentanspruch 2, dadurch gekennzeichnet, daß je zwei aus vorspringenden Teilen (5, 6) ein und derselben Armierung (2, 3) bestehende, in Bezug auf die Längsachse des Bandes (25) symmetrisch zueinander liegende Vorsprünge (48, 49) durch einen Wulst (13) auf der Innenseite (45) des Bandes (25) miteinander verbunden sind, wobei der Wulst (13) mindestens teilweise aus einem Teil der Armierung (2, 3) besteht und an einem Rand der Aussparungen (34) angeordnet ist.

4. Kette nach einem der Patentansprüche 1 bis 3, bei der der Scheitel (14, 15, 16, 17) jeden Vorsprungs (48, 49, 50, 51) in Längsrichtung des Bandes (25) parallel zu diesem verläuft, dadurch gekennzeichnet, daß mindestens ein Teil des Scheitels (16, 17) der am weitesten vor Längsachse des Bandes (25) befindlichen Vorsprünge (50, 51), d.h. der von der Längsachse des Bandes (25) abgelegene Scheitelteil ein in Querrichtung zum Band (25) gesehen konvex gekrümmtes Profil (55) aufweist.

5. Kette nach Patentanspruch 4, dadurch gekennzeichnet, daß mindestens ein Teil des Scheitels (14, 15, 16, 17) jeden Vorsprungs (48, 49, 50, 51) ein in Querrichtung zum Band (25) gesehen konvex gekrümmtes Profil (55) aufweist.

6. Kette nach einem der obigen Patentansprüche, dadurch gekennzeichnet, daß die Innenseite (45) des Bandes zwischen den in Längsrichtung aufeinanderfolgenden Vorsprüngen (48, 48', 49, 49', 50, 50', 51, 51') eine Aussparung (60, 61) aufweist, die mindestens teilweise weitgehend bis zur Tiefe der Kabel (30) reicht, mit denen die Sockel (2) der Armierungen miteinander verbunden sind.

7. Kette nach Patentanspruch 6, dadurch gekennzeichnet, daß sich ein Teil (62) der Aussparung (60, 61) zwischen den Sockeln (2) der Vorsprünge erstreckt.

8. Kette nach Patentanspruch 6 oder 7, dadurch gekennzeichnet, daß sich ein Teil (63) der Aussparung (60) teilweise der Seitenfläche eines Vorsprungs entlang erstreckt.
